# EUROPÄISCHE PATENTSCHRIFT

(11) **EP 1 888 691 B1**
(45) Veröffentlichungstag und Bekanntmachung des Hinweises auf die Patenterteilung: **23.02.2011**
(21) Anmeldenummer: 06724458.2
(22) Anmeldetag: 20.04.2006
(51) Int. Cl.: C09B 67/04, C09B 67/22, G02F 1/335, G02B 5/22

(54) **PIGMENTZUBEREITUNG AUF BASIS EINES AZOPIGMENTS**
PIGMENT PREPARATION BASED ON AN AZO PIGMENT
PRÉPARATION PIGMENTAIRE À BASE D'UN PIGMENT AZOÏQUE

(30) Priorität: 06.05.2005 DE 102005021160
(43) Veröffentlichungstag der Anmeldung: 20.02.2008
(73) Patentinhaber: Clariant Produkte (Deutschland) GmbH, 65929 Frankfurt am Main (DE)
(72) Erfinder: WEBER, Joachim, CH-4153 Reinach (CH); HÖTZEL, Patrick, 55116 Mainz (DE); SCHWEIKART, Karl-Heinz, 65760 Eschborn (DE); ALFTER, Frank, 65812 Bad Soden (DE)
(74) Vertreter: Hütter, Klaus
(86) Internationale Anmeldenummer: PCT/EP2006/003626
(87) Internationale Veröffentlichungsnummer: WO 2006/119847

(56) Entgegenhaltungen:
- EP-A- 1 411 091
- EP-A1- 0 076 024
- EP-A1- 0 894 831
- EP-A2- 1 167 461
- WO-A-03/008510
- WO-A-03/052000
- WO-A-2004/094534
- WO-A-2005/028564
- WO-A-2005/037929
- WO-A1-2004/029167
- GB-A- 2 364 322
- US-A1- 2003 164 118

## Beschreibung

Die Erfindung betrifft eine Pigmentzubereitung enthaltend ein Monoazopigment und einen Pigmentdispergator auf Basis einer Disazoverbindung, und ein Verfahren zu ihrer Herstellung.

Pigmentzubereitungen sind Kombinationen von Basispigmenten und so genannten Pigmentdispergatoren, das sind mit spezifisch wirksamen Gruppen substituierte Pigmente. Die Pigmentdispergatoren werden den Pigmenten zugesetzt, um die Dispergierung in den Anwendungsmedien, insbesondere in Lacken und Druckfarben, zu erleichtern und um die rheologischen und coloristischen Eigenschaften der Pigmente zu verbessern.

Beim Einsatz von Pigmenten zum Färben von hochmolekularen organischen Materialien werden hohe Anforderungen an die anwendungstechnischen Eigenschaften der Pigmente gestellt, wie hohe Farbstärken, leichte Dispergierbarkeit, hohe Buntheit (Chroma) und Reinheit des Farbtons und gute Licht- und Wetterechtheit. Wünschenswert ist eine möglichst universelle Einsetzbarkeit zum Färben von Kunststoffen sowie lösemittelhaltigen als auch von wässrigen Lacken und Druckfarben. Sowohl bei Lacken als auch bei Druckfarben geht der Trend hin zu hohen Pigmentkonzentrationen in der Anreibung, daher werden hochpigmentierte Lack- und Druckfarbenkonzentrate oder Mahlgüter (millbase) mit dennoch niedriger Viskosität gefordert, ebenso muss die Viskosität des fertigen Lackes oder Druckfarbe anwendungsgerecht sein. Bei Druckfarben wird eine hohe Transparenz, in Lacksystemen sind einwandfreie Überlackierechtheiten und Lösemittelechtheiten, Beständigkeit gegen Alkali und Säure, und insbesondere im Falle von Metalliclackierungen hohe Transparenz und brillante Farbtöne gewünscht. Im Falle der Kunststoffeinfärbung wird hohe Ausblutechtheit, Hitzestabilität und gute Dispergierbarkeit verlangt, was z.B. in hohen Farbstärken zum Ausdruck kommt. Außerdem ist eine möglichst universelle Einsetzbarkeit in verschiedenen Systemen, beispielsweise in wässrigen und lösemittelhaltigen Systemen erwünscht.

Weitere Einsatzgebiete von Pigmenten sind beispielsweise elektrophotographische Toner und Entwickler, Tinten wie beispielsweise Ink Jet Tinten oder e-inks, Farbfilter, oder Pulverlacke, die jeweils ihre zusätzlichen, speziellen Anforderungen haben.

Bei Color Filtern (Farbfilter) wird mittels Durchlicht von roten, grünen und blauen Bildpunkten ein Vollfarbbild erzeugt. Neben den "transmissive" (or "non-emissive") (= Durchlicht) Color Filtern gibt es auch "reflective" Color Filter, die dann gegebenenfalls auch mit gelb, cyan und magenta Bildpunkten arbeiten können. Bei den Color Filtern unterscheidet man zwischen AM-(active matrix) und PM-(passive matrix) LCD (liquid crystal display) Color Filtern, wobei den TFT (thin film transistor)-LCD Color Filtern eine besondere Bedeutung zukommt. Darüber hinaus können Color Filter auch bei MEMS (DMD) (= Micro-Electro-Mechanical Systems, Digital Micro Mirror Device), bei e-paper sowie weiteren geeigneten Display Technologien Einsatz finden.

Color Filter Displays finden in den unterschiedlichsten electro-optischen Systemen Anwendung, wie z.B. in Bildschirmen von Desk-Top Monitoren, in Computerbildschirmen, Bildschirmen von tragbaren Computern (Laptops, portable computers), PDA (Personal Digital Assistants) sowie in Mobiltelefon-, Videokamera-, GPS- (global positioning systems) und sonstigen Monitoren, sowie generell in Flüssigkristall- und Charge-Coupled-Devices, plasma displays oder in electroluminiscenten und anderen Displays. Letztgenannte können z.B. active (twisted nematic) oder passive (supertwisted nematic) ferroelektrische Displays sein oder z.B. Licht emittierende Dioden.

Zudem finden Farbfilter Einsatz in Flat Panel Displays (Flachbildschirmen), die zunehmend die herkömmlichen Kathodenstrahl-Fernsehbildschirme ersetzen, oder die generell als Anzeigetafel in beliebiger Größe für unbewegte und bewegte Information genutzt werden können.

Ein typischer LCD-Color-Filter Aufbau kann wie folgt schematisch beschrieben werden: Zwischen zwei Glasplatten befindet sich eine dünne Schicht mit Flüssigkristallen. Die obere Glasplatte hat neben einer Reihe von weiteren funktionalen Komponenten auf der äußeren Oberfläche die entsprechenden Bildpunkte, z.B. Rot, Grün, Blau (R,G,B). Diese Bildpunkte sind für einen besseren Kontrast schwarz umrandet, nach außen sind die R, G, B -Bildpunkte durch eine geeignete Schutzschicht gegen Umwelteinflüsse, wie Kratzer, geschützt. Die untere Glasplatte enthält noch weitere funktionale Komponenten wie z.B. ITO (Indium Tin Oxide) und TFT (Thin Film Transistors), die unter anderem zum Ansteuern der einzelnen Bildpunkte dienen.

Wird durch die untere Glasplatte geeignetes Licht (z.B. linear polarisiertes Licht einer bestimmten Wellenlänge) geschickt, so kann nun der Flüssigkristall durch elektronisches Ansteuern auf "hell" oder "dunkel" gestellt werden (oder auf jede beliebige Zwischenstufe).

Dementsprechend werden die Color Filter-Bildpunkte mit Licht versorgt und für das menschliche Auge ergibt sich ein entsprechendes auf R, G, B aufbauendes, farbiges, bewegtes oder unbewegtes Bild.

Die EP-A-0 894 831 offenbart Chinoxalin-monoazo-acetarylid-Pigmente, unter anderen das Monoazopigment der Formel (I) und ein Verfahren zu seiner Herstellung.

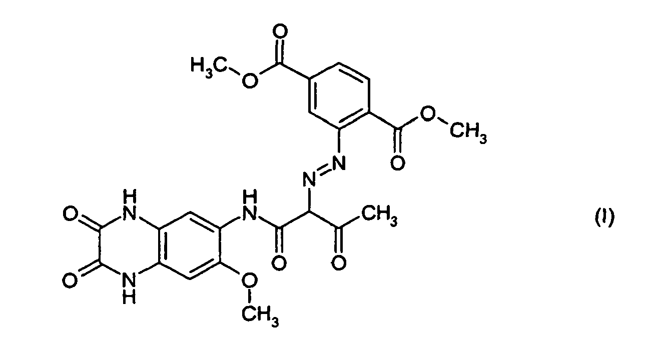

Die anwendungstechnischen Eigenschaften des offenbarten Monoazopigments der Formel (I) genügen nicht mehr in allen Punkten den heutigen Anforderungen. Die EP-A-0 076 024 offenbart Disazoverbindungen, die zur Verflüssigung von Pigmentdispersionen in nicht-wässrigen Systemen dienen.

Die WO-2004/029167 A1 offenbart Pigmentzubereitungen, die die in der EP-A-0 076 024 offenbarten Verbindungen enthalten.

Es bestand der Bedarf an einem gelben Monoazopigment, das die Nachteile der in der EP-A-0 894 831 offenbarten Monoazopigmente überwindet und den oben genannten Anforderungen in den verschiedenen Anwendungsmedien genügt.

Es wurde gefunden, dass eine Pigmentzubereitung, enthaltend das Monoazopigment der Formel (I) und einen speziellen Pigmentdispergator, welcher aus Disazoverbindungen zusammengesetzt ist, überraschenderweise die anwendungstechnischen Eigenschaften des Monoazopigments der Formel (I) signifikant verbessert.

Auch in den Dokumenten WO, A,2004/094534 sowie US, A, 2003,164,118 werden Pigmentzusammensetzungen, die dieses Monoazopigment enthalten, beschrieben.

Gegenstand der Erfindung ist eine Pigmentzubereitung enthaltend das Monoazopigment der Formel (I) 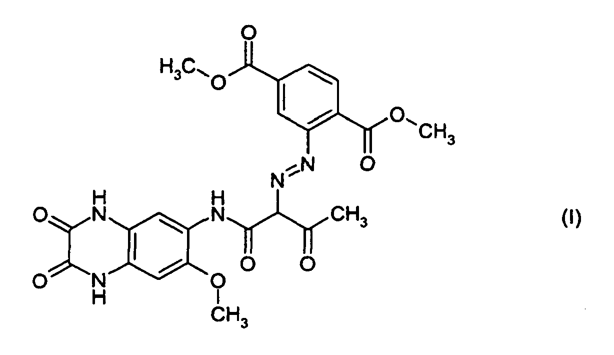 und einen Pigmentdispergator in einer Menge von 0,1 bis 40 Gew.-%, vorzugsweise 0,5 bis 25 Gew.-%, insbesondere 1,0 bis 17,5 Gew.-% bezogen auf das Gewicht des Monoazopigments der Formel (I), welcher aus Disazoverbindungen zusammengesetzt ist, wobei mindestens 30 Gew.-% der

Disazoverbindungen eine asymmetrische Disazoverbindung der Formel (II) darstellen

Y-X-A-X-Z (II),

worin
- A: Biphenylen, 3,3'-Dichlorbiphenylen, 3,3'-Dimethoxybiphenylen, 3,3'-Dimethylbiphenylen oder 2,2'-Dichlor-3,3'-dimethoxybiphenylen;
- X: eine Gruppe -NH-CO-CH(COCH₃)-N=N-, -N=N-CH(COCH₃)-CO-NH- oder -N=N-;
- Y: substituiertes oder unsubstituiertes Phenyl, Pyrazolin-5-on-4-yl, 1-Phenyl- pyrazolin-5-on-4-yl, 2-Hydroxynaphth-1-yl oder 2-Hydroxy-3- (phenylaminocarbonyl)naphth-1-yl, wobei die Substituenten C₁-C₄-alkyl, C₁- C₄-alkoxy, Nitro, Halogen oder C₁-C₄-alkoxycarbonyl sind, bedeuten, und
- Z: die Bedeutung von Y hat und zusätzlich mit einer Sulfonsäuregruppe, die als Ammoniumsalz vorliegt, substituiert ist.

Das Monoazopigment der Formel (I) kann nach dem in der EP-A-0 894 831 beschriebenen Verfahren hergestellt werden.

Die aus Disazoverbindungen zusammengesetzten Pigmentdispergatoren sind bekannte Verbindungen und in der EP-A-0 076 024 beschrieben. Sie werden üblicherweise durch eine entsprechende Mischkupplung hergestellt. Der Pigmentdispergator enthält daher meist eine Mischung aus Disazoverbindungen der Formeln Y-X-A-X-Z und Y-X-A-X-Y und Z-X-A-X-Z, wobei die asymmetrische Verbindung Y-X-A-X-Z vorzugsweise mindestens 35 Gew.-%, insbesondere 40 bis 60 Gew.-% und besonders bevorzugt 50 bis 60 Gew.-% ausmacht.

Bevorzugt werden solche Pigmentdispergatoren eingesetzt, in denen sich die zentrale divalente Gruppe A von Dichlorbenzidin ableitet.

Bevorzugt werden solche Pigmentdispergatoren eingesetzt, in denen sich die monovalente Endgruppe X-Y von Acetessiganilid ableitet, und in denen sich die sauer substituierte Endgruppe X-Z von Acetessig-4-sulfanilid ableitet.

Das Ammoniumsalz wird bevorzugt durch ein quaternäres Ammoniumion gebildet, welches mindestens eine lineare gesättigte Kohlenwasserstoffkette mit mehr als 6 Kohlenstoffatomen besitzt, insbesondere zwei lineare gesättigte Kohlenwasserstoffketten mit jeweils mehr als 12 Kohlenstoffatomen, wie beispielsweise Stearylbenzyl- oder Cocosalkyl-dimethyl-benzylammonium oder -2,4-dichlorbenzylammonium, Hexadecyl-, Stearyl-, Dodecyl-, Octadecyl- oder Cetyltrimethylammonium, Di-hydriertes Talgfettalkyl-, Dicocosalkyl-, Dioctadecyl- oder Distearyldimethylammonium, Oleyl- oder Kokos-di(2-hydroxyethylmethylammonium, hydriertes Polyoxyethylen(15)talgmethylammonium, N,N,N',N',N'-Pentamethyl-N-talg-1,3-propandiammonium, permethyliertes N-Stearyldiethylentriamin, permethyliertes N-Stearyltriethylentetramin, N-(3-Dodecyloxy-2-hydroxypropyl)octadecyl-dimethylammonium, Methyl-tri(2-octyl)ammonium, N,N-Di-(beta-stearoylethyl)-N,N-dimethylammonium, Laurylpyridinium, 2-Hydroxy-[5-chlor-, 5-isooctyl-, 5-t-butyl- oder n-nonyl-]1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylenbisisochinolinium oder Behenyltrimethylammonium, insbesondere Stearylbenzyloder Cocosalkyl-dimethyl-benzylammonium, Stearyl-, Octadecyl- oder Cetyltrimethylammonium, Di-hydriertes Talgfettalkyl-, Dicocosalkyl-, Dioctadecyloder Distearyldimethylammonium oder Oleyl-di(2-hydroxyethyl)methylammonium.

Besonders bevorzugt sind solche Pigmentdispergatoren, worin die Verbindung der Formel (II) der Formel (IIa) entspricht

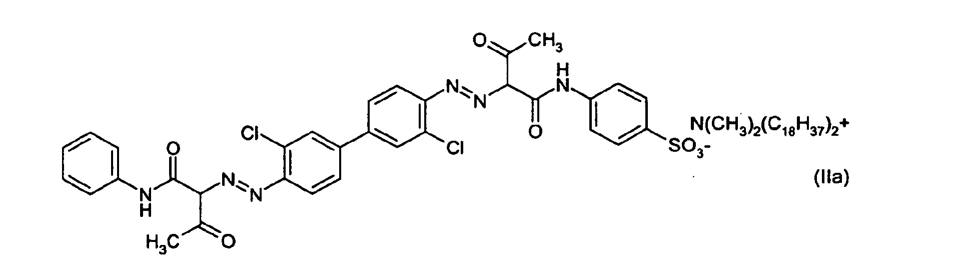

Die erfindungsgemäßen Pigmentzubereitungen können neben dem Monoazopigment der Formel (I) und dem Pigmentdispergator noch weitere übliche Hilfsmittel oder Zusatzstoffe enthalten, wie beispielsweise Tenside, nichtpigmentäre und pigmentäre Dispergiermittel, Füllstoffe, Stellmittel, Harze, Wachse, Entschäumer, Antistaubmittel, Extender, Antistatika, Farbmittel zum Nuancieren, Konservierungsmittel, Trocknungsverzögerungsmittel, Additive zur Steuerung der Rheologie, Netzmittel, Antioxidantien, UV-Absorber und Lichtstabilisatoren, Biocide, oder eine Kombination davon, vorzugsweise in einer Menge von 0,1 bis 25 Gew.-%, insbesondere 0,5 bis 15 Gew.-%, bezogen auf das Gesamtgewicht der Pigmentzubereitung.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykol-ethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethem, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des Weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen haltige Pigmentdispergatoren. Bevorzugt werden solche Pigmentdispergatoren eingesetzt, die sich strukturell von organischen Pigmenten mit gelber Eigenfarbe als Grundkörper ableiten.

Anionische Gruppen der als Hilfsmittel eingesetzten nichtpigmentären und pigmentären Dispergatoren, Tenside oder Harze können auch mit 1-, 2- oder 3-wertigen Ionen als Salze vorliegen, insbesondere verlackt, beispielsweise durch Ca-, Mg-, Ba-, Sr-, Mn- oder Al-lonen oder durch quaternäre Ammoniumionen.

Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Pulverisierung der getrockneten Pigmentzubereitung bewährt.

Gegenstand der Erfindung ist auch ein Verfahren zur Herstellung einer erfindungsgemäßen Pigmentzubereitung, dadurch gekennzeichnet, dass man den Pigmentdispergator und das Monoazopigment der Formel (I) miteinander mischt oder an einem beliebigen Zeitpunkt ihres Herstellungsprozesses aufeinander einwirken lässt.

Beispielsweise können die trockenen Komponenten in Granulat- oder Pulverform vor oder nach einer Mahlung gemischt werden; die eine Komponente kann zur anderen Komponente in feuchter oder trockener Form zugegeben werden, beispielsweise durch Mischen der Komponenten in Form der feuchten Presskuchen.

Das Mischen kann beispielsweise durch Acidpasting, Acidswelling, durch eine Mahlung in trockener Form, in feuchter Form, beispielsweise durch Knetung, oder in Suspension erfolgen, oder durch eine Kombination dieser Verfahren. Die Mahlung kann unter Zusatz von Wasser, Lösemitteln, Säuren oder Mahlhilfsmitteln wie Salz durchgeführt werden. Das Mischen kann auch durch Zugabe des Pigmentdispergators zum Monoazopigment der Formel (I) während des Herstellungsprozesses des Monoazopigment der Formel (I) erfolgen. Ein bevorzugter Herstellprozess des Monoazopigments der Formel (I) ist der in der EP 894 831 A1 offenbarte Herstellprozess der Azokupplung, ggf. mit anschließendem Finish.

Da beide Komponenten der erfindungsgemäßen Pigmentzubereitung Azofarbmittel sind, kann die Herstellung auch durch eine Mischkupplung oder durch eine Azokupplung der einen Komponente in Gegenwart der anderen Komponente erfolgen.

Bei der Trocknung einer feuchten Pigmentzubereitung können die bekannten Trockenaggregate zum Einsatz kommen, wie Trockenschränke, Schaufelradtrockner, Taumeltrockner, Kontakttrockner und insbesondere Spinflash- und Sprühtrockner. Durch die Wahl eines geeigneten Trockenaggregates können auch staubarme und rieselfähige Pulver oder Granulate erzeugt werden.

Bevorzugt werden die Pigmentzubereitungen durch Mahlung der Komponenten in trockener Form, in feuchter Form oder in Suspension hergestellt, insbesondere durch Salzknetung der Komponenten; des weiteren ist ein bevorzugtes Herstellungsverfahren die Zugabe des Pigmentdispergators zum Monoazopigment der Formel (I) während seiner Herstellung, das heißt vor oder während oder nach der Azokupplung des Monoazopigments der Formel (I); oder vor, während oder nach einem Finish des Monoazoapigments der Formel (I). Eine dritte bevorzugte Herstellvariante ist das Mischen der beiden Komponenten in trockener Form vor einer Pulverisierung.

Die besonders bevorzugte Herstellvariante ist die Salzknetung. Dazu wird das Rohpigment der Formel (I) zusammen mit dem erfindungsgemäßen Pigmentdispergator mit einer organischen Flüssigkeit und mit einem kristallinen Salz in Form einer knetbaren, hochviskosen Paste geknetet. Dabei entstehen Pigmentzubereitungen mit einer mittleren Teilchengröße d₅₀ unter 120 nm, vorzugsweise unter 100 nm.

Als Salz kommen Salze mono-, bi- oder trivalenter Metallionen, wie beispielsweise Alkali- oder Erdalkalimetallionen, mit anorganischen Säuren, beispielsweise Salzsäure, Schwefelsäure oder Phosphorsäure, oder mit organischen Säuren mit 1 bis 6 Kohlenstoffatomen, beispielsweise Ameisensäure und Essigsäure, in Frage. Bevorzugte Salze sind Natriumformiat; Natrium- oder Calciumacetat; Natriumcitrat; Kaliumnatriumtartrat; Natrium-, Kalium-, Calcium-, Zink- oder Aluminiumchlorid; Natrium- oder Aluminiumsulfat; Calciumcarbonat; oder Mischungen dieser Salze, und insbesondere Natriumchlorid. Die Salze werden meist in größerer Menge eingesetzt werden, beispielsweise in mindestens 1- bis 10-facher, bevorzugt 2- bis 8-facher Menge, insbesondere 3- bis 6-facher Menge, bezogen auf das Gewicht des Monoazopigments der Formel (I). Auch größere Mengen können eingesetzt werden, sind jedoch unwirtschaftlich.

Handelsübliches Salz kann grobkörnig sein und kann vor dem Einsatz bei der Salzknetung durch eine Mahlung zerkleinert werden.

Die organische Flüssigkeit kommt in solchen Mengen zum Einsatz, dass das Mahlgut eine zähe, teigige Masse bildet. Die eingesetzten Mengen liegen zwischen der 0,5- bis 5-fachen Menge, bevorzugt zwischen der 1- bis 2-fachen Menge bezogen auf das Gewicht des Monoazopigments der Formel (I). Als organische Flüssigkeiten kommen solche in Frage, in denen das Monoazopigment und das Salz möglichst unlöslich sind, und die den Kristallphasenwechsel von alpha nach beta nicht behindern. Beispiele für solche organischen Flüssigkeiten sind Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Di-, Tri- oder Tetraethylenglykol, Propylenglykol, Di-, Tri- oder Tetrapropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäuredi- oder Benzoesäurealkylester, wie Benzoesäure-C₁-C₄-alkylester oder C₁-C₁₂-Alkylphthalsäurediester; cyclische Ester, wie Caprolacton; Nitrile, wie Acetonitril, aliphatische oder aromatische Amine, wie beispielsweise Dimethylanilin oder Diethylanilin; gegebenenfalls halogenierte aliphatische Kohlenwasserstoffe oder aromatische Kohlenwasserstoffe wie Benzin, Pinen, Tetrachlorkohlenstoff, Tri- oder Tetrachlorethylen, Tetrachlorethane, Benzol oder durch Alkyl, Alkoxy, Nitro, Cyano oder Halogen substituiertes Benzol, beispielsweise Toluol, Xylole, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Aminophenole, Kresole, Nitrophenole, Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan, sowie Mischungen dieser organischen Flüssigkeiten. Bevorzugt werden Glykole und Glykolether, wie Ethylenglykol, Diethylenglykol oder Butylglykol, Amine, wie beispielsweise Anilin, Diethylanilin, Dimethylanilin, n-Butylamin, o-Toluidin oder Talgfettpropylendiamin, Dimethylformamid, N-Methylpyrrolidon, Triethanolamin, Toluol, Xylol, Cumen, Mesitylen oder Octylbenzol verwendet. Es ist möglich aber generell nicht erwünscht, eine geringe Menge Wasser einzusetzen, die nicht mehr als 50 Gew.-% der gesamten Flüssigkeit einschließlich des Wassers, das im eingesetzten Monoazopigment enthalten sein kann, betragen sollte.

Bei der Salzknetung können auch Säuren zum Einsatz kommen. Bevorzugt wird Phosphorsäure, Carbonsäuren, wie Essigsäure, Dodecylbenzolsulfonsäure und insbesondere Schwefelsäure eingesetzt.

Die Knetdauer richtet sich nach den zu erzielenden Anforderungen, sie kann beispielsweise von 30 Minuten bis 48 Stunden oder länger betragen, meist liegt sie im Bereich von 1 bis 24, insbesondere von 2 bis 8 Stunden.

Als Kneter kommen die bekannten kontinuierlichen und diskontinuierlichen, ein- oder mehrarmige Kneter in Betracht, bevorzugt zweiarmige diskontinuierliche Kneter, die möglichst hohe Scherkräfte auf die Knetmasse ausüben. Übliche Schaufelformen sind die Doppelmulden- (auch Sigma- oder Z-Schaufel genannt) oder die Mastikatorschaufel.

Die Temperatur bei der Knetung soll über dem Schmelzpunkt und unter dem Siedepunkt der organischen Flüssigkeit liegen.

Bevorzugt wird bei einer Temperatur von -20 bis 150°C, insbesondere 50 bis 120°C mit der 4- bis 6-fachen Menge, bezogen auf das Gewicht des Monoazopigments, an Natriumchlorid als Salz und der 1- bis 2-fachen Menge, bezogen auf das Gewicht des Monoazopigments, an Diethylenglykol als organische Flüssigkeit geknetet.

Während der Knetung kann, falls erforderlich, durch nachträgliche Zugabe von organischer Flüssigkeit und/oder Salz die zähe Konsistenz der Knetmasse eingestellt bzw. konstant gehalten werden. Die Konsistenz der Knetmasse kann sich während des Knetens beispielsweise durch Verdampfen der organischen Flüssigkeit oder durch das Mahlen des Monoazopigments zu kleineren Korngrößen ändern.

Vor der Knetung kann prinzipiell eine trockene Vorvermahlung von Monoazopigment mit Salz, wie sie beispielsweise in der EP-A-1 411 091 beschrieben ist, durchgeführt werden.

Das bei der Salzknetung eingesetzte Salz und die organische Flüssigkeit werden üblicherweise durch beispielsweise einen wässrigen Auszug bei saurem pH entfernt. Hierbei werden meist Säuren eingesetzt, die das Lösen des eingesetzten Salzes beschleunigen wie beispielsweise Salz-, Schwefel- oder Essigsäure. Es wird meist ein pH kleiner 3, bevorzugt 1 bis 2 eingestellt, oder in 1 bis 10 gew.-%iger Säure ausgerührt.

Für den Auszug können auch organische Lösemittel zugesetzt werden. Der Auszug kann bei beliebiger Temperatur durchgeführt werden, solange das Medium flüssig bleibt, ggf. auch über dem Siedepunkt der Mischung. Da bevorzugt in wässrigem Medium gearbeitet wird, werden Temperaturen zwischen 0 und 100°C, insbesondere zwischen 60°C und Siedetemperatur gewählt.

Die nach dem erfindungsgemäßen Verfahren hergestellten Pigmentzubereitungen können mit den üblichen Methoden isoliert werden, beispielsweise durch Filtrieren, Dekantieren oder Zentrifugieren. Bevorzugt wird filtriert. Lösemittel können auch durch Waschen entfernt werden.

Die erfindungsgemäße Pigmentzubereitung kommt vorzugsweise in getrockneter fester Form, in rieselfähiger, pulverförmiger Beschaffenheit oder als Granulat, aber auch als beispielsweise wässriger Presskuchen zum Einsatz.

Bei der Salzknetung, beim Auszug, zum Presskuchen oder auch nach der Trocknung können die oben angeführten Hilfsmittel zugesetzt werden.

Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut.

Hochmolekulare organische Materialien, die mit den erfindungsgemäßen Pigmentzubereitungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.

Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen.

Gegenstand der vorliegenden Erfindung ist auch ein hochmolekulares organisches Material, enthaltend eine färberisch wirksame Menge einer erfindungsgemäßen Pigmentzubereitung.

Bezogen auf das zu pigmentierende, hochmolekulare organische Material setzt man die erfindungsgemäße Pigmentzubereitungen meist in einer Menge von 0,01 bis 30 Gew.-%, vorzugsweise 0,1 bis 15 Gew.-%, ein.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzubereitungen geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Außerdem sind die erfindungsgemäßen Pigmentzubereitungen als Farbmittel in Ink-Jet-Tinten auf wässriger und nichtwässriger Basis sowie in solchen Tinten, die nach dem Hot-Melt-Verfahren arbeiten, geeignet.

In den Ink-Jet-Tinten können die erfindungsgemäßen Pigmentzubereitungen auch mit anderen Farbmitteln wie beispielsweise anorganische oder organische Pigmente und/oder Farbstoffe nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere der sogenannten "spot colors" in den Farben beispielsweise orange, grün, blau, golden und silbern enthalten.

Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180.

Ink-Jet-Tinten enthalten im Allgemeinen insgesamt 0,5 bis 15 Gew.-%, vorzugsweise 1,5 bis 8 Gew.-%, (trocken gerechnet) der erfindungsgemäßen Pigmentzubereitung.

Mikroemulsionstinten basieren auf organischen Lösemitteln, Wasser und ggf. einer zusätzlichen hydrotropen Substanz (Grenzflächenvermittler).

Mikroemulsionstinten enthalten im Allgemeinen 0,5 bis 15 Gew.-%, vorzugsweise 1,5 bis 8 Gew.%, der erfindungsgemäßen Pigmentzubereitung, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% der erfindungsgemäßen Pigmentzubereitung, 85 bis 99,5 Gew.% mindestens eines organischen Lösemittels und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% der erfindungsgemäßen Pigmentzubereitung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Weiterhin sind die erfindungsgemäßen Pigmentzubereitungen auch als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet.

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die gelben Farbtöne der erfindungsgemäßen Pigmentzubereitungen sind gut geeignet zum Nuancieren, besonders der Rot- und Grünfarbtöne, des Color Filter Farbsets Rot-Grün-Blau(R,G,B). Diese drei Farben liegen als getrennte Farbpunkte nebeneinander vor, und ergeben von hinten durchleuchtet ein Vollfarbbild.

Typische Farbmittel für den roten Farbpunkt sind Pyrrolopyrrol-, Chinacridon- und Azopigmente, wie z.B. P.R. 254, P.R. 209, P.R.175 und P.O. 38, einzeln oder gemischt.

Für den grünen Farbpunkt werden typischerweise Phthalocyaninfarbmittel eingesetzt, wie z.B. P.G.36 und P.G.7.

Für den blauen Farbpunkt werden typischerweise nicht oder nur niedrig halogenierte Phthalocyaninfarbmittel eingesetzt, wie z.B. P.B.15:6.

Bei Bedarf können den jeweiligen Farbpunkten noch weitere Farben zum Nuancieren zugemischt werden.

Gegenstand der Erfindung sind weiterhin Farbfilter, enthaltend eine färberisch wirksame Menge einer erfindungsgemäßen Pigmentzubereitung.

Es war überraschend und nicht vorhersehbar, dass die erfindungsgemäßen Pigmentzubereitungen die Eigenschaften der bekannten Monoazopigmente der Formel (I) übertreffen.

Die erfindungsgemäßen Pigmentzubereitungen zeichnen sich durch ihre hervorragenden coloristischen und rheologischen Eigenschaften aus, insbesondere hohe Flockungsstabilität, leichte Dispergierbarkeit, gute Rheologie, hohe Farbstärke, Transparenz und Sättigung (Chroma). Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- oder Druckfarbenkonzentrate. Auch andere Eigenschaften, wie beispielsweise Glanz, Überlackierechtheit, Lösemittelechtheit, Alkali- und Säureechtheit, Licht- und Wetterechtheiten und Reinheit des Farbtons, sind sehr gut.

Die erfindungsgemäßen Pigmentzubereitungen lassen sich hervorragend in Farbfiltern einsetzen. Hier sorgen sie für hohen Kontrast und genügen auch den sonstigen, beim Einsatz in Color Filtern gestellten Anforderungen, wie hohe Temperaturstabilität oder steile und schmale Absorptionsbanden. Ebenso geeignet sind sie beispielsweise für Ink Jet Anwendungen durch ihre hohe Farbstärke, durch die gute Lagerstabilität bei niedriger Viskosität der Inkjet-Tinte, die kein Verstopfen der Düsen und hohe Transparenz zeigt.

Ganz besondere Anforderungen werden bei den Color Filter-Materialien an die eingesetzten Farbmittel gestellt.

Als wichtigste technische Parameter, die erfüllt sein müssen, lassen sich nennen:
- hohe Thermostabilität: während des Herstellvorganges eines Color Filters werden die einzelnen aufgetragenen Schichten erhitzt, so dass die Pigmentzubereitung für bis zu 1 Stunde Temperaturen bis zu 300°C aushalten muss;
- gute Dispergierbarkeit in Color Filter Systemen;
- steile und schmale Absorptionsbanden der jeweils aufgebrachten Color Filter Schicht;
- hoher Kontrast;
- eine gute und stabile Viskosität im Color Filter Medium: Eine zu hohe Viskosität verhindert die gleichmäßige Verteilung der Flüssigkeit auf dem Glassubstrat und beeinträchtigt dadurch die Qualität des Bildes;
- ökotoxikologische Unbedenklichkeit beim Verarbeiten;
- nicht flokkulierendes Verhalten
- eine möglichst glatte (= nicht rauhe) Oberfläche der aufgebrachten (pigmentierten) Color Filter
- Säurebeständigkeit (für z.B. Etchingverfahren)
- Lösemittelechtheit.

Zur Beurteilung der Eigenschaften der Pigmentzubereitung auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM) ausgewählt.

Die Bestimmung der Viskosität erfolgte nach dem Verdünnen des Mahlguts auf die Pigmentendkonzentration mit dem Viskospatel nach Rossmann, Typ 301 der Firma Erichsen.

In den folgenden Beispielen bedeuten Prozentangaben Gewichtsprozente und Teile Gewichtsteile, sofern nicht anders angegeben.

### Beispiel 1

450 g micronisiertes Natriumchlorid, 75 g Pigment der Formel (I), hergestellt entsprechend Beispiel 1 der EP-A-0 894 831, 3,9 g Pigmentdispergator, hergestellt analog EP-A-0 076 024, Beispiel 1 durch eine Mischkupplung von einem Mol-Teil Acetessiganilid und einem Mol-Teil Acetessig-4-sulfanilid mit einem Mol-Teil des Hydrochlorids des Bis-Diazoniumsalzes von Dichlorbenzidin und anschließender Umsetzung mit Dioctadecyldimethylammoniumchlorid, und 115 ml Diethylenglykol werden 8 Stunden bei 40°C in einem Kneter mit Sigma-Schaufeln geknetet. Die Knetmasse wird in 4 Liter 5 gew.-%iger Schwefelsäure 2 Stunden bei 40°C gerührt, die Suspension wird abgesaugt, der Presskuchen mit Wasser salzfrei gewaschen und bei 80°C getrocknet. Es werden 75 g erfindungsgemäße Pigmentzubereitung erhalten.

### Beispiel 2

450 g micronisiertes Natriumchlorid, 75 Teile Pigment der Formel (I), hergestellt entsprechend Beispiel 1 der EP-A-0 894 831, und 115 ml Diethylenglykol werden 8 Stunden bei 40°C in einem Kneter mit Sigma-Schaufeln geknetet. Die Knetmasse wird in 4 Liter 5 gew.-%iger Schwefelsäure 2 Stunden bei 40°C gerührt, die Suspension wird abgesaugt, der Presskuchen mit Wasser salzfrei gewaschen und bei 80°C getrocknet. Es werden 75 g Pigmentgranulat erhalten. 50 g des Pigmentgranulats werden mit 5 g Pigmentdispergator, hergestellt analog EP-A-0 076 024, Beispiel 1 durch eine Mischkupplung von einem Mol-Teil Acetessiganilid und einem Mol-Teil Acetessig-4-sulfanilid mit einem Mol-Teil des Hydrochlorids des Bis-Diazoniumsalzes von Dichlorbenzidin und anschließender Umsetzung mit Dioctadecyldimethyl-ammoniumchlorid, trocken pulverisiert.

### Beispiel 3

1125 g micronisiertes Natriumchlorid, 187,5 g Pigment der Formel (I), hergestellt entsprechend Beispiel 1 der EP-A-0 894 831, 9,4 g Pigmentdispergator, hergestellt analog EP-A-0 076 024, Beispiel 1 durch eine Mischkupplung von einem Mol-Teil Acetessiganilid und einem Mol-Teil Acetessig-4-sulfanilid mit einem Mol-Teil des Hydrochlorids des Bis-Diazoniumsalzes von Dichlorbenzidin und anschließender Umsetzung mit Dioctadecyldimethylammoniumchlorid, 9,4 g eines Dispergierhilfsmittels und 310 ml Diethylenglykol werden 8 Stunden bei 85°C in einem Kneter mit Sigma-Schaufeln geknetet. Die Knetmasse wird in 10 Liter 5 gew.-%iger Schwefelsäure 2 Stunden bei 40°C gerührt, die Suspension wird abgesaugt, der Presskuchen mit Wasser salzfrei gewaschen und bei 80°C getrocknet, das Granulat wird pulverisiert. Es werden 185 g Pigmentzubereitung erhalten.

### Prüfung der coloristischen Eigenschaften der Pigmentzubereitungen:

### Bestimmung der Farbstärke, Reinheit und Helligkeit:

Zur Bestimmung der Farbstärke, der Reinheit und der Helligkeit wird jeweils 1 Teil der Pigmentzubereitung mit 9 Teilen eines wässrigen Basisfirnis-Systems vermischt und anschließend dispergiert. In einer Weissaufhellung werden jeweils 2 Teile des dabei erhaltenen Anreibegemisches mit 100 Teilen einer Standard-Weißdispersion homogenisiert und auf eine Prüfkarte aufgezogen. Anschließend werden die coloristischen Eigenschaften (Farbstärke, Reinheit und Helligkeit) mit Hilfe eines Spektrophotometers CM-3700d der Firma Minolta bestimmt.

### Bestimmung der Transparenz:

Zur Bestimmung der Transparenz werden jeweils 4 Teile des Anreibegemisches mit 9 Teilen destilliertem Wasser und 7 Teilen eines Acrylatfimisses homogenisiert und auf eine Prüfkarte aufgezogen. Die Beurteilung der Transparenz erfolgt anschließend visuell.

Als Standard für die Farbstärke, die Reinheitsdifferenz dC, die Helligkeitsdifferenz dL und die Transparenz wurde das Pigment, hergestellt entsprechend Beispiel 1 der EP-A-0 894 831, herangezogen.

Die erfindungsgemäßen Pigmentzubereitungen, die in den Beispielen 1, 2 und 3 erhalten wurden, zeichnen sich durch eine sehr hohe Farbstärke, durch einen reinen und hellen Farbton und durch eine hohe Transparenz aus. Die erfindungsgemäße Pigmentzubereitung des Beispiels 1 zeigt dabei gegenüber dem Standard eine bedeutend höhere Farbstärke und eine merklich höhere Transparenz.

Herstellung von Farbmittelpräparationen:

Die erfindungsgemäße Pigmentzubereitung wird, entweder als Pulver oder als Presskuchen, zusammen mit den nachstehend genannten Dispergiermitteln, dem organischen Lösemittel und den anderen Zusätzen in entionisiertem Wasser angeteigt und dann mit einem Dissolver homogenisiert und vordispergiert. Die anschließende Feindispergierung erfolgt unter Kühlung mit Hilfe einer Perlmühle über einen Zeitraum von 3 Stunden. Im Anschluss wird die Dispersion mit entionisiertem Wasser auf die gewünschte Pigmentendkonzentration eingestellt.

Die in den folgenden Beispielen beschriebenen Farbmittelpräparationen wurden nach dem zuvor beschriebenen Verfahren hergestellt, wobei die folgenden Bestandteile in den angegebenen Mengen so verwendet wurden, dass 100 Teile der jeweiligen Farbmittelpräparation entstehen und Teile Gewichtsteile bedeuten.

### Beispiel A: (Vergleichsbeispiel)

| | |
|---|---|
| 20 Teile | Pigment der Formel (I), hergestellt entsprechend dem Beispiel 1 der EP 894 831 A1 |
| 2,5 Teile | Acrylatharz, Na-Salz (Dispergiermittel) |
| 1,2 Teile | Polyethylenglykolalkylether, Na-Salz (Dispergiermittel) |
| 7,5 Teile | Propylenglykol |
| 0,2 Teile | Konservierungsmittel |
| Rest | Wasser |
| Teilchengröße d₅₀: | 142 nm. |

### Beispiel B:

Die Herstellung der Farbmittelpräparation erfolgte analog Beispiel A, wobei anstelle des Pigments der Formel (I) die erfindungsgemäße Pigmentzubereitung aus Beispiel 1 eingesetzt wurde. Teilchengröße d₅₀: 80 nm.

### Beispiel C:

Die Herstellung der Farbmittelpräparation erfolgte analog Beispiel A, wobei anstelle des Pigments der Formel (I) die erfindungsgemäße Pigmentzubereitung aus Beispiel 2 eingesetzt wurde.

### Beispiel D:

Die Herstellung der Farbmittelpräparation erfolgte analog Beispiel A, wobei anstelle des Pigments der Formel (I) die erfindungsgemäße Pigmentzubereitung aus Beispiel 3 eingesetzt wurde.

### Beurteilung der drucktechnischen Eigenschaften:

Um die drucktechnischen Eigenschaften zu beurteilen, wurden aus den Farbmittelpräparationen der Beispiele B bis D Testtinten hergestellt und deren Verdruckbarkeit mit einem thermischen Ink-Jet-Drucker untersucht.

Für die Herstellung der Testtinten wurden die Farbmittelpräparationen zunächst über einen 1 µm-Filter feinfiltriert, um Mahlkörperabrieb und eventuelle Grobanteile abzutrennen. Danach wurden die filtrierten Farbmittelpräparationen mit Wasser verdünnt und mit weiteren niedermolekularen Alkoholen und Polyolen versetzt, wobei der Pigmentgehalt auf 5 Gew.-% bezogen auf die Tinte (100 Gew.-%) eingestellt wurde. Mit dem Drucker HP 960C (Hewlett Packard) wurden Testbilder auf handelsübliche Normalpapiere (Kopierpapiere) und Spezialpapiere (Premium Qualität) der Firma Hewlett Packard gedruckt. Die Beurteilung bzgl. Qualität und Güte des Druckbildes erfolgte durch visuelle Betrachtung.

### Beurteilung der Optischen Dichte:

Zur Beurteilung der optischen Dichte wurden die Testtinten mit dem Drucker HP 960C (Hewlett Packard) im Vollflächendruck auf unbeschichtetes Papier der Firma DataCopy gedruckt und die optische Dichte mit Hilfe eines Spektralphotometers der Firma Gretag MacBeth gemessen.

### Glanzmessung:

Zur Messung des Glanzes wurden die Testtinten mit dem Drucker HP 960C (Hewlett Packard) im Vollflächendruck auf Premium Glossy Paper der Firma Epson gedruckt und der Glanz mit Hilfe eines Glanzmessgerätes der Firma Byk Gardner im 20° bzw. im 60° Winkel gemessen.

Die aus den Farbmittelpräparationen der Beispiele B bis D hergestellten Testtinten besitzen eine sehr niedrige Viskosität und zeigen ein sehr gutes Druckverhalten. Insbesondere ergeben sich eine hohe Zuverlässigkeit der jeweiligen Testtinte im Druckverlauf (sehr gutes Andruckverhalten, keine Düsenverstopfung) und ein sehr gleichmäßiges Druckbild von exzellenter Qualität auf den verschiedenen verwendeten Papieren. Drucke der aus den Farbmittelpräparationen der Beispiele B bis D hergestellten Testtinten auf unbeschichtetem Papier (plain paper) zeigen gegenüber dem Standard eine hohe optische Dichte und auf Premium Glossy Paper einen sehr hohen Glanz.

### Prüfung für Color-Filter:

Es wird zunächst eine Color Filter-Paste hergestellt. Sie besteht aus Pigmentzusammensetzung, Bindemittel, Lösungsmittel und Dispergierhilfsmittel.

### Rezeptur:

73 g Propylenglykol-monoethylenether-acetat (PGMEA) werden mit 17 g Dispergiermittel aufgeschüttet.

Das Gemisch wird für 10 Minuten in einem Paint Shaker geschüttelt. Zugabe von 10 g Pigmentzubereitung aus Beispiel 1, 2 oder 3. Das Gemisch wird für 10 Minuten in einem Paint Shaker geschüttelt. Die vorstehende Mischung wird mit Zirkonkugeln (0 0.3 mm) versetzt. Das Gemisch wird für 3 Stunden in einem Paint Shaker geschüttelt. Die Dispersion wird anschließend filtriert.

Von der Dispersion wird die Viskosität mit einem Rotationsviskosimeter bei einer Temperatur von 23°C ± 0,5°C und bei einer Schergeschwindigkeit von 250 s⁻¹ ermittelt.

30 g einer Lackmischung (90 % PGMEA und 10 % Resin) werden mit 20 g der obigen Dispersion vermengt. Die dabei erhaltene Color Filter-Paste wird auf ein Glassubstrat mittels Spin

Coater aufgetragen, um einen Color Filter-Film zu erzeugen. Die Transparenz, koloristischen Werte, Hitzestabilität und der Kontrast werden an diesem Color Filter-Film bestimmt.

Die Transmission des beschichteten Glassubstrates wird spektrophotometrisch im Anwendungsbereich von 400-700 nm ermittelt, die coloristischen Werte werden mit dem CIE Farbdreieck x,y,Y-Werte) beschrieben: x beschreibt dabei die blaurot Achse, y die blau-grün Achse und Y die Brillanz.

Das beschichtete Glassubstrat wird nach Messung der Transmission bei 80°C für 10 Minuten temperiert. Anschließend werden die Transmission bzw. die x,y,Y-Werte gemessen. Das beschichtete Glassubstrat wird nun bei 250°C für 1 Stunde temperiert und wiederum die Transmission bzw. die x,y,Y-Werte ermittelt.

Außerdem wird mit der Color Filter-Paste eine Vollton-Lackierung und nach dem Verdünnen mit Weiß-Paste eine so genannte Aufhellungslackierung durch Rakelung angefertigt, deren Koloristiken beurteilt werden.

### Ergebnisse:

Prüfung für Color Filter mit der Pigmentzubereitungen der Beispiele 1, 2 und 3. Viskosität der Dispersion:

| Bsp. 1 | Bsp. 2 | Bsp. 3 |
|---|---|---|
| 4 mPas | 4 mPas | 5 mPas |

Die Lackierungen zeigen hohe Transparenz und Farbstärke und einen reinen Farbton.

Anschließend werden 3 ml von der Color Filter-Paste pipettiert und auf ein Glassubstrat mittels Spin Coater bei einer Drehgeschwindigkeit von 350 rpm während 20 sec aufgetragen. Die koloristischen Eigenschaften des Color Filter-Films werden anschließend spetrophotometrisch bestimmt.
x, y, Y - Werte bei 80°C:

| | Bsp. 1 | Bsp.2 | Bsp.3 |
|---|---|---|---|
| x - Wert | 0.4003 | 0.4093 | 0.4086 |
| y - Wert | 0.4595 | 0.4681 | 0.4707 |
| Y - Wert | 83.84 | 82.17 | 83.08 |

### Transmissionswerte 80°C bei 400-700 nm:

Color Filter mit Pigmentzubereitung aus Beispiel 1:

| 400nm | 410nm | 420nm | 430nm | 440nm | 450nm | 460nm | 470nm | 480nm | 490nm | 500nm |
|---|---|---|---|---|---|---|---|---|---|---|
| 1,964 | 2,582 | 3,989 | 6,473 | 10,582 | 16,907 | 25,896 | 37,085 | 50,627 | 64,967 | 77,197 |
| 510nm | 520nm | 530nm | 540nm | 550nm | 560nm | 570nm | 580nm | 590nm | 600nm | 610nm |
| 84,613 | 87,483 | 88,068 | 88,182 | 88,486 | 89,262 | 90,279 | 91,266 | 92,023 | 92,336 | 92,291 |
| 620nm | 630nm | 640nm | 650nm | 660nm | 670nm | 680nm | 690nm | 700nm | | |
| 91,899 | 91,333 | 90,773 | 90,359 | 90,176 | 90,170 | 90,334 | 90,550 | 90,654 | | |

Color Filter mit Pigmentzubereitung aus Beispiel 2:

| 400nm | 410nm | 420nm | 430nm | 440nm | 450nm | 460nm | 470nm | 480nm | 490nm | 500nm |
|---|---|---|---|---|---|---|---|---|---|---|
| 1,755 | 2,145 | 3,087 | 4,901 | 7,971 | 13,026 | 20,799 | 31,229 | 44,412 | 58,656 | 71,518 |
| 510nm | 520nm | 530nm | 540nm | 550nm | 560nm | 570nm | 580nm | 590nm | 600nm | 610nm |
| 80,702 | 85,835 | 87,999 | 88,474 | 88,321 | 88,287 | 88,562 | 88,240 | 90,193 | 91,153 | 91,855 |
| 620nm | 630nm | 640nm | 650nm | 660nm | 670nm | 680nm | 690nm | 700nm | | |
| 92,162 | 92,099 | 91,714 | 91,197 | 90,628 | 90,111 | 89,720 | 89,517 | 89,374 | | |

Color Filter mit Pigmentzubereitung aus Beispiel 3:

| 400nm | 410nm | 420nm | 430nm | 440nm | 450nm | 460nm | 470nm | 480nm | 490nm | 500nm |
|---|---|---|---|---|---|---|---|---|---|---|
| 1,161 | 1,479 | 2,225 | 3,941 | 7,010 | 12,242 | 20,485 | 31,560 | 45,789 | 61,621 | 75,356 |
| 510nm | 520nm | 530nm | 540nm | 550nm | 560nm | 570nm | 580nm | 590nm | 600nm | 610nm |
| 83,302 | 86,087 | 86,931 | 87,791 | 89,110 | 90,547 | 91,536 | 91,862 | 91,617 | 91,014 | 90,454 |
| 620nm | 630nm | 640nm | 650nm | 660nm | 670nm | 680nm | 690nm | 700nm | | |
| 90,170 | 90,248 | 90,646 | 91,283 | 92,007 | 92,500 | 92,615 | 92,398 | 91,751 | | |

Die Hitzestabilität ist in allen drei Beispielen gut.

## Patentansprüche

1. Pigmentzubereitung enthaltend das Monoazopigment der Formel (I) 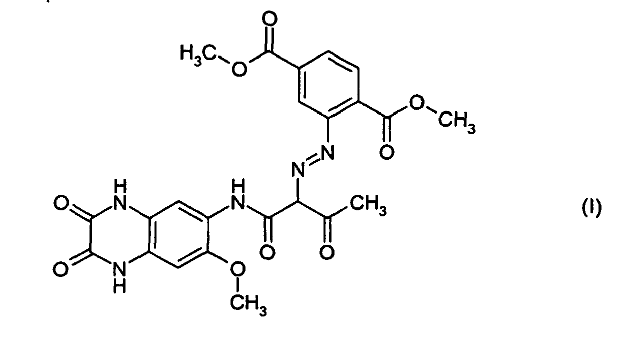 und einen Pigmentdispergator in einer Menge von 0,1 bis 40 Gew.-%, vorzugsweise 0,5 bis 25 Gew.-%, insbesondere 1,0 bis 17,5 Gew.-% bezogen auf das Gewicht des Monoazopigments der Formel (I), welcher aus Disazoverbindungen zusammengesetzt ist, wobei mindestens 30 Gew.-% der Disazoverbindungen eine asymmetrische Disazoverbindung der Formel (II) darstellen
Y-X-A-X-Z (II),
worin
A Biphenylen, 3,3'-Dichlorbiphenylen, 3,3'-Dimethoxybiphenylen, 3,3'-Dimethylbiphenylen oder 2,2'-Dichlor-3,3'-dimethoxybiphenylen;
X eine Gruppe -NH-CO-CH(COCH₃)-N=N-, -N=N-CH(COCH₃)-CO-NH- oder -N=N-;
Y substituiertes oder unsubstituiertes Phenyl, Pyrazolin-5-on-4-yl, 1-Phenyl- pyrazolin-5-on-4-yl, 2-Hydroxynaphth-1-yl oder 2-Hydroxy-3- (phenylaminocarbonyl)naphth-1-yl, wobei die Substituenten C₁-C₄-alkyl, C₁- C₄-alkoxy, Nitro, Halogen oder C₁-C₄-alkoxycarbonyl sind, bedeuten, und
Z die Bedeutung von Y hat und zusätzlich mit einer Sulfonsäuregruppe, die als Ammoniumsalz vorliegt, substituiert ist.

2. Pigmentzubereitung nach Anspruch 1, **dadurch gekennzeichnet, dass** der Pigmentdispergator in einer Menge von 0,5 bis 25 Gew.%, bezogen auf das Gewicht des Monoazopigments der Formel (I), enthalten ist.

3. Pigmentzubereitung nach Anspruch 1 oder 2, **dadurch gekennzeichnet, dass** die asymmetrische Disazoverbindung der Formel (II) 40 bis 60 Gew.-% der Disazoverbindungen ausmacht.

4. Pigmentzubereitung nach einem oder mehreren der Ansprüche 1 bis 3, **dadurch gekennzeichnet, dass** A die Bedeutung 3,3'-Dichlorbenzidin hat.

5. Pigmentzubereitung nach einem oder mehreren der Ansprüche 1 bis 4, **dadurch gekennzeichnet, dass** Y Phenyl und X -NH-CO-CH(COCH₃)-N=N- oder -N=N-CH(COCH₃)-CO-NH- bedeutet.

6. Pigmentzubereitung nach einem oder mehreren der Ansprüche 1 bis 5, **dadurch gekennzeichnet, dass** Z die Bedeutung 4-Sulfophenyl und X die Bedeutung -NH-CO-CH(COCH₃)-N=N- oder -N=N-CH(COCH₃)-CO-NH- hat.

7. Pigmentzubereitung nach einem oder mehreren der Ansprüche 1 bis 6, **dadurch gekennzeichnet, dass**
A die Bedeutung 3,3'-Dichlorbenzidin,
Y die Bedeutung Phenyl,
X die Bedeutung-NH-CO-CH(COCH₃)-N=N- oder -N=N-CH(COCH₃)-CO-NH- ,
Z die Bedeutung 4-Sulfophenyl-dioctadecyldimethylammonium haben.

8. Verfahren zur Herstellung einer Pigmentzubereitung nach einem oder mehreren der Ansprüche 1 bis 7, **dadurch gekennzeichnet, dass** man den Pigmentdispergator und das Monoazopigment der Formel (I) miteinander mischt oder an einem beliebigen Zeitpunkt ihres Herstellungsprozesses aufeinander einwirken lässt.

9. Verfahren nach Anspruch 8, **dadurch gekennzeichnet, dass** man das Rohpigment der Formel (I) und den Pigmentdispergator mit einem kristallinen Salz und einer organischen Flüssigkeit in Form einer hochviskosen Paste knetet.

10. Verwendung einer Pigmentzubereitung nach einem oder mehreren der Ansprüche 1 bis 7 zum Pigmentieren von hochmolekularen organischen Materialien natürlicher oder synthetischer Herkunft, sowie von elektrophotographischen Tonern und Entwicklern, Elektretmaterialien, Farbfiltern, Tinten, Druckfarben und Saatgut.

11. Hochmolekulares organisches Material, enthaltend eine färberisch wirksame Menge einer Pigmentzubereitung nach einem oder mehreren der Ansprüche 1 bis 7.

12. Farbfilter, enthaltend eine färberisch wirksame Menge einer Pigmentzubereitung nach einem oder mehreren der Ansprüche 1 bis 7.

## Claims

1. A pigment preparation comprising the monoazo pigment of the formula (I) 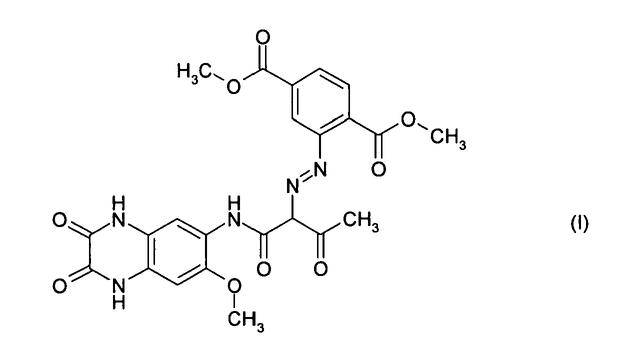 and a pigment dispersant in an amount of 0.1 % to 40%, preferably 0.5% to 25%, more particularly 1.0% to 17.5% by weight, based on the weight of the monoazo pigment of the formula (I), which is composed of disazo compounds, at least 30% by weight of the disazo compounds constituting an asymmetric disazo compound of the formula (II)
Y-X-A-X-Z (II),
in which
A is biphenylene, 3,3'-dichlorobiphenylene, 3,3'-dimethoxybiphenylene, 3,3'-dimethylbiphenylene or 2,2'-dichloro-3,3'-dimethoxybiphenylene;
X is a group -NH-CO-CH(COCH₃)-N=N-, -N=N-CH(COCH₃)-CO-NH- or -N=N-;
Y is substituted or unsubstituted phenyl, pyrazolin-5-on-4-yl, 1-phenyl- pyrazolin-5-on-4-yl, 2-hydroxynaphth-1-yl or 2-hydroxy-3-(phenylamino- carbonyl)naphth-1-yl, the substituents being C₁-C₄ alkyl, C₁-C₄ alkoxy, nitro, halogen or C₁-C₄ alkoxycarbonyl, and
Z has the definition of Y and is additionally substituted by a sulfonic acid group present in the form of the ammonium salt.

2. The pigment preparation as claimed in claim 1, wherein the pigment dispersant is present in an amount of 0.5% to 25% by weight, based on the weight of the monoazo pigment of the formula (I).

3. The pigment preparation as claimed in claim 1 or 2, wherein the asymmetric disazo compound of the formula (II) makes up 40% to 60% by weight of the disazo compounds.

4. The pigment preparation as claimed in one or more of claims 1 to 3, wherein A has the definition 3,3'-dichlorobenzidine.

5. The pigment preparation as claimed in one or more of claims 1 to 4, wherein Y is phenyl and X is -NH-CO-CH(COCH₃)-N=N- or -N=N-CH(COCH₃)-CO-NH-.

6. The pigment preparation as claimed in one or more of claims 1 to 5, wherein Z has the definition 4-sulfophenyl and X has the definition -NH-CO-CH(COCH₃)-N=N- or -N=N-CH(COCH₃)-CO-NH-.

7. The pigment preparation as claimed in one or more of claims 1 to 6, wherein
A has the definition 3,3'-dichlorobenzidine,
Y has the definition phenyl,
X has the definition -NH-CO-CH(COCH₃)-N=N- or -N=N-CH(COCH₃)-CO-NH- ,
Z has the definition 4-sulfophenyldioctadecyldimethylammonium.

8. A process for producing a pigment preparation as claimed in one or more of claims 1 to 7 wherein the pigment dispersant and the monoazo pigment of the formula (I) are mixed with one another or they are caused to act on one another at any desired point in time during the operation of preparing them.

9. The process as claimed in claim 8, wherein the coarse pigment of the formula (I) and the pigment dispersant are kneaded with a crystalline salt and an organic liquid in the form of a highly viscous paste.

10. The use of a pigment preparation as claimed in one or more of claims 1 to 7 for pigmenting high molecular mass organic materials of natural or synthetic origin, electrophotographic toners and developers, electret materials, color filters, inks, including printing inks, and seed.

11. A high molecular mass organic material comprising a coloringly effective amount of a pigment preparation as claimed in one or more of claims 1 to 7.

12. A color filter comprising a coloringly effective amount of a pigment preparation as claimed in one or more of claims 1 to 7.

## Revendications

1. Composition de pigment contenant un pigment monoazoïque de formule (I) 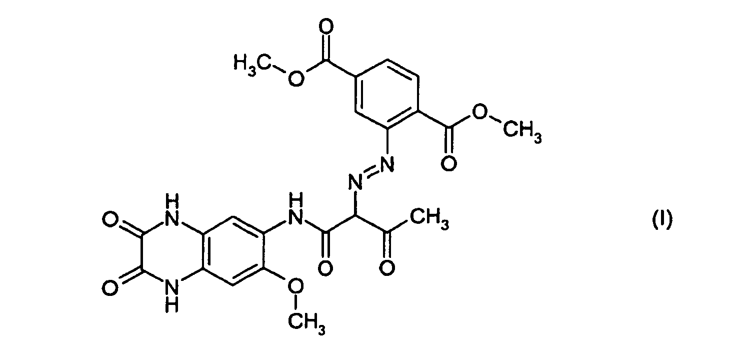 et un dispersant pigmentaire en une quantité de 0,1 à 40 % en poids, de préférence de 0,5 à 25 % en poids, en particulier de 1,0 à 17,5 % en poids, par rapport au poids du pigment monoazoïque de formule (I), qui est composé de composés disazoïques, au moins 30 % en poids des composés disazoïques représentant un composé disazoïque asymétrique de formule (II)
Y-X-A-X-Z (II),
dans laquelle
A représente un groupe biphénylène, 3,3'-dichloro- biphénylène, 3,3'-diméthoxybiphénylène, 3,3'- diméthylbiphénylène ou 2,2'-dichloro-3,3'- diméthoxybiphénylène ;
X représente un groupe -NH-CO-CH(COCH₃)-N=N-, -N=N-CH(COCH₃)-CO-NH- ou -N=N- ;
Y représente un groupe phényle, pyrazolin-5-on-4- yle, 1-phényl-pyrazolin-5-on-4-yle, 2-hydroxy- napht-1-yle ou 2-hydroxy-3-(phénylaminocarbonyl)- napht-1-yle, substitué ou non substitué, les substituants étant des atomes d'halogène ou des groupes alkyle en C₁-C₄, alcoxy en C₁-C₄, nitro ou alcoxy(C₁-C₄)carbonyle, et
Z ayant la signification de Y et étant en outre substitué par un groupe sulfo qui est présent sous forme de sel d'ammonium.

2. Composition de pigment selon la revendication 1, **caractérisée en ce que** le dispersant pigmentaire est contenu en une quantité de 0,5 à 25 % en poids, par rapport au poids du pigment monoazoïque de formule (I).

3. Composition de pigment selon la revendication 1 ou 2, **caractérisée en ce que** le composé disazoïque asymétrique de formule (II) représente 40 à 60 % en poids des composés disazoïques.

4. Composition de pigment selon une ou plusieurs des revendications 1 à 3, **caractérisée en ce que** A représente la 3,3'-dichlorobenzidine.

5. Composition de pigment selon une ou plusieurs des revendications 1 à 4, **caractérisée en ce que** Y représente le groupe phényle et X représente le groupe -NH-CO-CH(COCH₃)-N=N- ou -N=N-CH(COCH₃)-CO-NH-.

6. Composition de pigment selon une ou plusieurs des revendications 1 à 5, **caractérisée en ce que** Z représente le groupe 4-sulfophényle et X représente le groupe -NH-CO-CH(COCH₃)-N=N- ou -N=N-CH(COCH₃)-CO-NH-.

7. Composition de pigment selon une ou plusieurs des revendications 1 à 6, **caractérisée en ce que**
A représente la 3,3'-dichlorobenzidine,
Y représente le groupe phényle,
X représente le groupe -NH-CO-CH(COCH₃)-N=N- ou -N=N-CH(COCH₃)-CO-NH-,
Z représente le groupe 4-sulfophényl-dioctadécyl- diméthylammonium.

8. Procédé pour la préparation d'une composition de pigment selon une ou plusieurs des revendications 1 à 7, **caractérisé en ce qu'**on mélange ensemble le dispersant pigmentaire et le pigment monoazoïque de formule (I) ou on les fait agir l'un sur l'autre à un moment quelconque de sa préparation.

9. Procédé selon la revendication 8, **caractérisé en ce qu'**on malaxe le pigment brut de formule (I) et le dispersant pigmentaire avec un sel cristallin et un liquide organique, sous forme de pâte très visqueuse.

10. Utilisation d'une composition de pigment selon une ou plusieurs des revendications 1 à 7, pour la pigmentation de matières organiques de masse moléculaire élevée, d'origine naturelle ou synthétique, ainsi que de toners et développeurs électrophotographiques, de matériaux électret, de filtres colorés, d'encres, d'encres pour impression et de semences.

11. Matière organique de masse moléculaire élevée, contenant une quantité efficace pour la coloration d'une composition de pigment selon une ou plusieurs des revendications 1 à 7.

12. Filtre coloré, contenant une quantité efficace pour la coloration d'une composition de pigment selon une ou plusieurs des revendications 1 à 7.
